(19) Europäisches Patentamt
European Patent Office
Office européen des brevets

(11) EP 4 550 330 A1

(12) **EUROPEAN PATENT APPLICATION**
published in accordance with Art. 153(4) EPC

(43) Date of publication:
**07.05.2025 Bulletin 2025/19**

(21) Application number: **23831580.8**

(22) Date of filing: **29.06.2023**

(51) International Patent Classification (IPC):
***G11B 7/24044*** *(2013.01)* ***C08G 18/28*** *(2006.01)*
***G02B 5/32*** *(2006.01)* ***G03H 1/02*** *(2006.01)*
***G11B 7/0065*** *(2006.01)*

(52) Cooperative Patent Classification (CPC):
**C08G 18/28; G02B 5/32; G03H 1/02; G11B 7/0065; G11B 7/24044**

(86) International application number:
**PCT/JP2023/024171**

(87) International publication number:
**WO 2024/005141 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.06.2022 JP 2022106253**

(71) Applicant: **Mitsubishi Chemical Corporation**
**Tokyo 100-8251 (JP)**

(72) Inventors:
- **INOUE, Kazuma**
**Tokyo 100-8251 (JP)**
- **SATO, Ken**
**Tokyo 100-8251 (JP)**
- **TANAKA, Asato**
**Tokyo 100-8251 (JP)**

(74) Representative: **Hoffmann Eitle**
**Patent- und Rechtsanwälte PartmbB**
**Arabellastraße 30**
**81925 München (DE)**

(54) **COMPOSITION FOR HOLOGRAPHIC RECORDING MEDIA**

(57) A holographic recording medium composition comprising components (a) to (d) below, wherein an amount of allophanate bond units contained in the component (a) relative to a total weight of the components (a) and (b) is $6.5 \times 10^{-4}$ mol/g or more:
component (a): an isocyanate group-containing compound;
component (b): an isocyanate-reactive functional group-containing compound;
component (c): a polymerizable monomer; and
component (d): a photopolymerization initiator.

[Fig. 1]

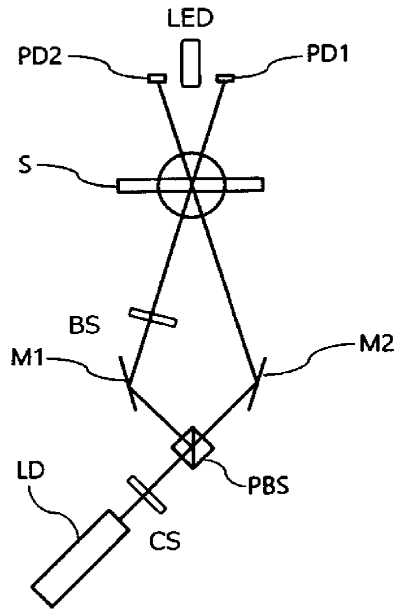


EP 4 550 330 A1

## Description

Technical Field

The present invention relates to a holographic recording medium composition, a cured product for a holographic recording medium that is obtained by curing the holographic recording medium composition, and a holographic recording medium using the holographic recording medium composition.

Background Art

A holographic recording medium, which has been attracting attention in recent years, is a recording medium that utilizes light interference and diffraction phenomena. A hologram is a recording method in which an interference pattern created by interference fringes of two lights (referred to as recording lights) called a reference light and an object light (also referred to as information light or signal light) is three-dimensionally recorded inside a recording medium. A holographic recording medium contains a photosensitive material in its recording layer. In a holographic recording medium, interference patterns are recorded by chemically changing the photosensitive material in accordance with the interference pattern and locally changing its optical properties.

A holographic recording medium has been developed for memory applications. As another use of the holographic recording medium, studies are being conducted to apply it to optical element such as light guide plate for AR glass, and the like. In the case of AR glass (AR glasses) applications, the holographic recorded optical element used in the light guide plate is required to have a wide viewing angle, high diffraction efficiency for light in the visible region, and high transparency of the medium.

A holographic recording medium can be classified ed into several types depending on what kind of optical properties are changed. It has been considered that a volume type hologram recording medium, which performs recording by creating a refractive index difference within a recording layer having a thickness more than a certain thickness, is advantageous for applications to a light guide plate of AR glass, because it can save space and achieve high diffraction efficiency and wavelength selectivity.

An example of a volume type holographic recording medium is a write-once type which does not require wet processing or bleaching. A composition of a recording layer thereof is generally one in which a photoactive compound is compatibilized in a matrix resin. For example, it is known to use a photopolymer as a recording layer, in which a matrix resin is combined with a photoactive compound, the photoactive compound being a combination of a photopolymerization initiator and a polymerizable reactive compound capable of radical polymerization or cationic polymerization(Patent Literatures 1-4).

When recording holograms, if there is a recording layer made of photopolymer in an area where interference patterns are formed by intersection of reference light and object light, a photopolymerization initiator causes a chemical reaction and becomes an active substance in the area of high light intensity among the interference patterns. This then acts on the polymerizable compound, causing it to polymerize. In this process, if there is a difference in refractive index between a matrix resin and a polymer generated from the polymerizable compound, the interference patterns are fixed in the recording layer as a difference in refractive index. In addition, when the polymerizable compound polymerizes, diffusion of the polymerizable compound occurs from a periphery thereof, causing a concentration distribution of the polymerizable compound or its polymerized product inside the recording layer. Based on this principle, an interference pattern is recorded on the holographic recording medium as a refractive index difference.

Hereinafter, the process of changing the optical characteristics of the recording layer by exposing the recording layer of the medium under predetermined conditions as described above will be referred to as "recording exposure." The process of recording and exposing different interference patterns at the same position by changing the intersection angle between the reference light and the object light or by changing their respective angles of incidence will be referred to as "multiplex recording exposure". The number of times which multiplex recording exposure is performed will be referred to as "total multiplex number".

Citation List

Patent Literature

[PTL 1] JP 2021-12249 A

[PTL 2] JP 2007-34334 A

[PTL 3] JP H8-160842 A

[PTL 4] JP 2003-156992 A

## Summary of Invention

### Technical Problem

During recording exposure, the spacing (grating pitch) of the interference pattern formed in the medium is not constant, and grating pitches ranging from narrow to wide are generally formed.

In this case, it is desirable that the polymerization reaction proceeds equally and a hologram is formed whether the grating pitch is narrow or wide. However, as a result of the present inventor's investigation, it was found that the performance of the hologram formed changes depending on the grating pitch in the case of a certain medium.

An object of the present invention is to provide a holographic recording medium in which the recording performance of the hologram does not depend on the grating pitch.

### Solution to Problem

The present inventors have discovered that by using a recording material that contains a certain amount or more of allophanate bond units, it is possible to produce a holographic recording medium in which the holographic recording performance is independent of the grating pitch and has excellent recording performance stability. This makes it possible to reduce color unevenness in the hologram and improve the brightness in the hologram.

The gist of the present invention is as follows.

[1] A holographic recording medium composition comprising components (a) to (d) below, wherein an amount of allophanate bond units contained in the component (a) relative to a total weight of the components (a) and (b) is $6.5 \times 10^{-4}$ mol/g or more:

component (a): an isocyanate group-containing compound;

component (b): an isocyanate-reactive functional group-containing compound;

component (c): a polymerizable monomer; and

component (d): a photopolymerization initiator.

[2] The holographic recording medium composition according to [1], wherein the polymerizable monomer of the component (c) is a (meth)acrylic-based monomer.

[3] The holographic recording medium composition according to [1] or [2], wherein the molecular weight of the polymerizable monomer of the component (c) is 300 or more.

[4] The holographic recording medium composition according to any one of [1] to [3], wherein the content of the component (c) in the composition is 0.1% by weight or more and 80% by weight or less, and the content of the component (d) in the composition is 0.1% by weight or more and 20% by weight or less with respect to the component (c).

[5] The holographic recording medium composition according to any one of [1] to [4], further comprising a component (e) below:
component (e): a nitroxyl radical group-containing compound.

[6] The holographic recording medium composition according to [5], wherein the component (e) is a compound having an isocyanate-reactive functional group and a nitroxyl radical group.

[7] The holographic recording medium composition according to [6], wherein the component (e) is 4-hydroxy-2,2,6,6-tetramethylpiperidine-1-oxyl.

[8] The holographic recording medium composition according to any one of [5] to [7], wherein a molar ratio of the component (e) to the component (d) in the composition (component (e)/component (d)) is 0.1 or more and 10 or less.

[9] The holographic recording medium composition according to any one of [1] to [8], wherein the total content of the component (a) and component (b) in the composition is 0.1% by weight or more and 99.9% by weight or less, and wherein the ratio of the number of isocyanate-reactive functional groups contained in the component (b) to the number of isocyanate groups contained in the component (a) is 0.1 or more and 10.0 or less.

[10] The holographic recording medium composition according to any one of [1] to [9], further comprising a component (f) below:
component (f): a curing catalyst.

[11] A cured product for a holographic recording medium, wherein the cured product is obtained by curing the holographic recording medium composition according to any one of [1] to [10].

[12] A stacked body for a holographic recording medium, the stacked body comprising: a recording layer formed from the cured product for a holographic recording medium according to [11]; and a support.

[13] A holographic recording medium obtained by exposing the cured product for a holographic recording medium according to [11] or the stacked body for a holographic recording medium according to [12] to light.

[14] The holographic recording medium according to [13], wherein the holographic recording medium is a light guide plate for AR glasses.

Advantageous Effects of Invention

According to the present invention, by using a recording material containing a certain amount or more of allophanate bond units, it is possible to produce a holographic recording medium in which the recording performance of the hologram does not depend on the grating pitch. This makes it possible to reduce color unevenness in the hologram and improve brightness in the hologram.

Brief Description of Drawings

[Fig. 1] Fig. 1 is a structural diagram showing the outline of a device used for transmission holographic recording in Examples.

[Fig. 2] Fig. 2 is a structural diagram showing the outline of a device used for reflection holographic recording in Examples.

Description of Embodiments

Embodiments of the present invention will be described in detail. The following articles, methods, etc. are examples (representative examples) of the embodiments of the present invention, and the present invention is not limited to the features of the embodiments so long as the invention does not depart from the scope thereof.

[Holographic recording medium composition]

The holographic recording medium composition of the present invention contains components (a) to (d) below, and an amount of allophanate bond units contained in the component (a) relative to a total weight of the components (a) and (b) is $6.5 \times 10^{-4}$ mol/g or more.

component (a): an isocyanate group-containing compound

component (b): an isocyanate-reactive functional group-containing compound

component (c): a polymerizable monomer

component (d): a photopolymerization initiator

<Component (a)>

The isocyanate group-containing compound denoted as the component (a) is preferably a component that reacts with the isocyanate-reactive functional group-containing compound (component (b)) in the presence of a curing catalyst (component (f)) described later to form a resin matrix.

An isocyanate group ratio in the molecule of the isocyanate group-containing compound is preferably 50% by weight or less, more preferably 47% by weight or less, and still more preferably 45% by weight or less. The lower limit of the isocyanate group ratio is generally 0.1% by weight or more and preferably 1% by weight or more. When the isocyanate group ratio is equal to or less than the above upper limit, a holographic recording medium to be formed is unlikely to become turbid, and optical uniformity is obtained. When the isocyanate group ratio is equal to or more than the above lower limit, the hardness and glass transition temperature of the resin matrix increase, and loss of records can be prevented.

In the present invention, the isocyanate group ratio indicates the ratio of the isocyanate group to the whole amount of the isocyanate group-containing compound used. The isocyanate group ratio in the isocyanate group-containing compound is determined from the following formula. The molecular weight of the isocyanate group is 42.

(42 × the number of isocyanate groups/the molecular weight of the isocyanate group-containing compound) × 100

There is no particular limitation on the type of isocyanate group-containing compound, and the compound may have an aromatic skeleton, an aromatic aliphatic skeleton, an aliphatic skeleton, or an alicyclic skeleton. The isocyanate group-containing compound may have in its molecule one isocyanate group or two or more isocyanate groups and has preferably two or more isocyanate groups. This is because a recording layer having good record retainability can be obtained using a three-dimensional crosslinked matrix obtained from a compound having two or more isocyanate groups in its molecule (component (a)) and a compound having three or more isocyanate-reactive functional groups in its molecule (component (b)) or a three-dimensional crosslinked matrix obtained from a compound having three or more isocyanate groups in its molecule (component (a)) and a compound having two or more isocyanate-reactive functional groups in its molecule (component (b)).

Examples of the isocyanate group-containing compound include isocyanic acid, butyl isocyanate, octyl isocyanate, butyl diisocyanate, hexamethylene diisocyanate (HMDI), isophorone diisocyanate (IPDI), 1,8-diisocyanato-4-(isocyanatomethyl)octane, 2,2,4- or 2,4,4-trimethylhexamethylene diisocyanate, isomeric bis(4,4'-isocyanatocyclohexyl) methanes and mixtures thereof having any desired isomer content, isocyanatomethyl-1,8-octanediisocyanate, 1,4-cyclohexylene diisocyanate, isomeric cyclohexanedimethylene diisocyanates, 1,4-phenylene diisocyanate, 2,4- or 2,6-toluene diisocyanate, 1,5-naphthylene diisocyanate, 2,4'- or 4,4'-diphenylmethane diisocyanate, triphenylmethane 4,4',4''-triisocyanate, and the like.

It is also possible to use an isocyanate derivative having a urethane structure, a urea structure, a carbodiimide structure, an acrylic urea structure, an isocyanurate structure, an allophanate structure, a biuret structure, an oxadiazinetrione structure, a uretdione structure, and/or an iminooxadiazinedione structure.

The holographic recording medium composition of the present invention uses, as the isocyanate group-containing compound of the component (a), an isocyanate group-containing compound containing an allophanate bond unit represented by the following formula (I).

[Chem. 1]

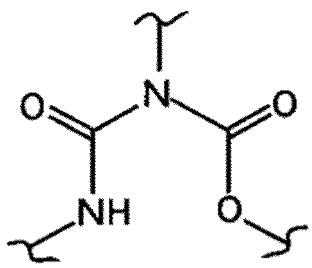

···(I)

The allophanate bond unit is produced by the reaction of a urethane bond with an isocyanate group. Therefore, an isocyanate group-containing compound containing an allophanate bond unit represented by the above formula (I) can be

obtained, for example, by subjecting a polyfunctional isocyanate and an alcohol to a urethane reaction to obtain a polyfunctional isocyanate urethane compound, and then reacting an isocyanate group-containing

compound therewith.

Examples of the polyfunctional isocyanate used in this reaction include hexamethylene diisocyanate (HMDI), isophorone diisocyanate (IPDI), 1,8-diisocyanato-4-(isocyanatomethyl)octane, 2,2,4- or 2,4,4-trimethylhexamethylene diisocyanate, isomeric bis(4,4'-isocyanatocyclohexyl)methane and mixtures thereof having any desired isomer content, isocyanatomethyl-1,8-octane diisocyanate, 1,4-cyclohexylene diisocyanate, isomeric cyclohexanedimethylene diisocyanates, 1,4-phenylene diisocyanate, 2,4- or 2,6-toluene diisocyanate, 1,5-naphthylene diisocyanate, 2,4'- or 4,4'-diphenylmethane diisocyanate, triphenylmethane 4,4',4''-triisocyanate, and the like.

Any one of them may be used alone, or any combination of two or more of them may be used at any ratio.

Examples of the alcohol include linear monohydric aliphatic alcohols and branched monohydric aliphatic alcohols.

Examples of the linear monohydric aliphatic alcohols include linear monohydric aliphatic alcohols having 1 to 20 carbon atoms. Examples of the linear monohydric aliphatic alcohols having 1 to 20 carbon atoms include methanol, ethanol, n-propanol, n-butanol, n-pentanol, n-hexanol, n-heptanol, n-octanol, n-nonanol, n-decanol, n-undecanol, n-dodecanol (lauryl alcohol), n-tridecanol, n-tetradecanol, n-pentadecanol, n-hexadecanol, n-heptadecanol, n-octadecanol (stearyl alcohol), n-nonadecanol, and eicosanol.

Examples of the branched monohydric aliphatic alcohols include branched monohydric aliphatic alcohols having 3 to 20 carbon atoms. Examples of the branched monohydric aliphatic alcohols having 3 to 20 carbon atoms include isopropanol, isobutanol (isobutyl alcohol), secbutanol, tert-butanol, isopentanol, isohexanol, isoheptanol, isooctanol, 2-ethylhexanol, isononanol, isodecanol, 5-ethyl-2-nonanol, trimethylnonyl alcohol, 2-hexyldecanol, 3,9-diethyl-6-tridecanol, 2-isoheptylisoundecanol, and 2-octyldodecanol.

Any one of them may be used alone, or any combination of two or more of them may be used at any ratio.

In the present invention, as the component (a), the isocyanate group-containing compound containing an allophanate bond unit as described above is used in the amount shown below.

As long as the amount of allophanate bond units present is within the following range, only an isocyanate group-containing compound containing an allophanate bond unit may be used as the isocyanate group-containing compound. Instead thereof, an isocyanate group-containing compound containing an allophanate bond unit and an isocyanate group-containing compound containing no allophanate bond unit may be used in combination.

In the holographic recording medium composition of the present invention, the amount of allophanate bond units present in the isocyanate group-containing compound of the component (a) is usually $6.5\times10^{-4}$ mol/g or more, preferably $7.0\times10^{-4}$ mol/g or more, in terms of a molar amount relative to the total weight of the component (a) and the component (b) described below. When the amount of allophanate bond units present is equal to or more than the above lower limit, the mobility of the polymerizable monomer (component (c)) described below in the matrix can be ensured, and the polymerizable monomer can be consumed efficiently during recording. That is, the allophanate bond unit has a weaker intermolecular force than the urethane bond, and therefore has a smaller interaction with the polymerizable monomer, and is able to maintain the diffusion coefficient of the polymerizable monomer within the composition, and thus suppresses the grating pitch dependency of holographic recording, thereby reducing color unevenness and improving brightness.

On the other hand, the amount of allophanate bond units present in the isocyanate group-containing compound, the component (a), is preferably $2.0\times10^{-3}$ mol/g or less, more preferably $1.8\times10^{-3}$ mol/g or less, and even more preferably $1.5\times10^{-3}$ mol/g or less, in terms of a molar ratio relative to the total weight of the component (a) and the component (b). When the amount of allophanate bond units present is equal to or less than the above upper limit, the affinity with the matrix of the polymerizable monomer (component (c)) described below is improved, and turbidity is less likely to occur when the holographic recording medium is formed.

The amount of allophanate bond units present can be calculated from the total weight of the isocyanate group-containing compound used as the component (a) and the compound having an isocyanate-reactive functional group-containing compound used as the component (b) and the molar amount of allophanate bond units in the component (a). The calculation method will be explained in the Examples section below.

<Component (b)>

The isocyanate-reactive functional group-containing compound denoted as the component (b) is a compound having active hydrogen (an isocyanate-reactive functional group) that is involved in a chain extension reaction with the isocyanate group-containing compound denoted as the component (a). Examples of the isocyanate-reactive functional group include a hydroxy group, an amino group, and a mercapto group. The isocyanate-reactive functional group-containing compound may contain in its molecule one isocyanate-reactive functional group or two or more isocyanate-reactive functional groups and preferably contains two or more isocyanate-reactive functional groups. When two or more isocyanate-reactive functional groups are contained, the isocyanate-reactive functional groups contained in one molecule may be of the same type or different types.

The number average molecular weight of the isocyanate-reactive functional group-containing compound is generally 50 or more, preferably 100 or more, and more preferably 150 or more and is generally 50000 or less, preferably 10000 or less, and more preferably 5000 or less. When the number average molecular weight of the isocyanate-reactive functional group-containing compound is equal to or more than the above lower limit, the crosslink density is low, and a reduction in recording rate can be prevented. When the number average molecular weight of the isocyanate-reactive functional group-containing compound is equal to or less than the above upper limit, its compatibility with another component increases, and the crosslink density increases, so that loss of recorded contents can be prevented.

The number average molecular weight of the component (b) is a value measured by gel permeation chromatography (GPC).

(Hydroxy group-containing compound)

The compound having a hydroxy group as the isocyanate-reactive functional group may be any compound having in its molecule at least one hydroxy group, but it is preferable that the compound has two or more hydroxy groups. Examples of such a compound include: glycols such as ethylene glycol, triethylene glycol, diethylene glycol, polyethylene glycol, propylene glycol, polypropylene glycol (PPG), neopentyl glycol, and the like; diols such as butanediol, pentanediol, hexanediol, heptanediol, tetramethylene glycol (TMG), polytetramethylene glycol (PTMG), and the like; bisphenols; triols such as glycerin, trimethylolpropane, butanetriol, pentanetriol, hexanetriol, decanetriol, and the like; compounds obtained by modifying these polyfunctional alcohols with a polyethyleneoxy chain or a polypropyleneoxy chain; polyfunctional polyoxybutylenes; polyfunctional polycaprolactones; polyfunctional polyesters; polyfunctional polycarbonates; polyfunctional polypropylene glycols, and the like. Any one of them may be used alone, or any combination of two or more of them may be used at any ratio.

The number average molecular weight of the hydroxy group-containing compound is generally 50 or more, preferably 100 or more, and more preferably 150 or more and is generally 50000 or less, preferably 10000 or less, and more preferably 5000 or less. When the number average molecular weight of the hydroxy group-containing compound is equal to or more than the above lower limit, the crosslink density is low, and a reduction in recording rate can be prevented. When the number average molecular weight of the hydroxy group-containing compound is equal to or less than the above upper limit, its compatibility with another component is improved, and the crosslink density increases, so that loss of recorded contents can be prevented.

(Amino group-containing compound)

The compound having an amino group as the isocyanate-reactive functional group may be any compound having in its molecule at least one amino group, but it is preferable that the compound has two or more amino groups. Examples of such a compound include: aliphatic amines such as ethylenediamine, diethylenetriamine, triethylenetetramine, hexamethylenediamine, and the like; alicyclic amines such as isophoronediamine, menthanediamine, **4,4'-**diaminodicyclohexylmethane, and the like; aromatic amines such as m-xylylenediamine, diaminodiphenylmethane, **m-**phenylenediamine, and the like. Any one of them may be used alone, or any combination of two or more of them may be used at any ratio.

The number average molecular weight of the amino group-containing compound is generally 50 or more, preferably 100 or more, and more preferably 150 or more and is generally 50000 or less, preferably 10000 or less, and more preferably 5000 or less. When the number average molecular weight of the amino group-containing compound is equal to or more than the above lower limit, the crosslink density is low, and a reduction in the recording rate can be prevented. When the number average molecular weight of the amino group-containing compound is equal to or less than the above upper limit, its compatibility with another component is improved, and the crosslink density increases, so that loss of recorded contents can be prevented.

(Mercapto group-containing compound)

The compound having a mercapto group as the isocyanate-reactive functional group may be any compound having in its molecule at least one mercapto group, but it is preferable that the compound has two or more mercapto groups. Examples of such a compound include 1,3-butanedithiol, 1,4-butanedithiol, 2,3-butanedithiol, 1,2-benzenedithiol, 1,3-benzenedithiol, 1,4-benzenedithiol, 1,10-decanedithiol, 1,2-ethanedithiol, 1,6-hexanedithiol, 1,9-nonanedithiol, pentaerythritol tetrakis(3-mercaptopropionate), pentaerythritol tetrakis(2-mercaptoacetate), pentaerythritol tetrakis(3-mercaptobutyrate), trimethylolpropane tris(3-mercaptopropionate), dipentaerythritol hexakis(3-mercaptopropionate), 1,4-bis(3-mercaptobutyryloxy)butane, and the like. Any one of them may be used alone, or any combination of two or more of

them may be used at any ratio.

The number average molecular weight of the mercapto group-containing compound is generally 50 or more, preferably 100 or more, and more preferably 150 or more and is generally 50000 or less, preferably 10000 or less, and more preferably 5000 or less. When the number average molecular weight of the mercapto group-containing compound is equal to or more than the above lower limit, the crosslink density is low, and a reduction in the recording rate can be prevented. When the number average molecular weight of the mercapto group-containing compound is equal to or less than the above upper limit, its compatibility with another component is improved, and the crosslink density increases, so that loss of recorded contents can be prevented.

As the component (b), it is preferable to use polycaprolactones from the viewpoints of material stability and structural flexibility.

Examples of the polycaprolactone used as the component (b) include polycaprolactonepolyols (such as polycaprolactonediol and polycaprolactonetriol) obtained by subjecting ε-caprolactone to ring-opening polymerization in the presence of a polyhydric alcohol such as ethylene glycol, diethylene glycol, triethylene glycol, propylene glycol, dipropylene glycol, 1,3-butanediol, 1,4-butanediol, hexamethylene glycol, methylpentanediol, 2,4-diethylpentanediol, neopentyl glycol, 2-ethyl-1,3-hexanediol, trimethylolpropane, ditrimethylolpropane, pentaerythritol, dipentaerythritol, or the like, or a diol such as polypropylene glycol or polytetramethylene glycol (PTMG), or the like. Any one of them may be used alone, or any combination of two or more of them may be used at any ratio.

<Component (c)>

The polymerizable monomer denoted as the component (c) is a compound that can be polymerized using the photopolymerization initiator denoted as the component (d) described later. The component (c) is a monomer compound to be polymerized during recording and/or postexposure.

There is no particular limitation on the type of polymerizable monomer used for the holographic recording medium composition of the present invention, and an appropriate compound can be selected from known compounds. Examples of the polymerizable monomer include cationically polymerizable monomers, anionically polymerizable monomers, and radically polymerizable monomers. Any of these monomers can be used, and two or more of them may be used in combination. However, it is preferable to use a radically polymerizable monomer as the component (C), because the radically polymerizable monomer is unlikely to inhibit the reaction through which the isocyanate group-containing compound and the isocyanate-reactive functional group-containing compound form the matrix.

(Cationically polymerizable monomer)

Examples of the cationically polymerizable monomer include epoxy compounds, oxetane compounds, oxolane compounds, cyclic acetal compounds, cyclic lactone compounds, thiirane compounds, thietane compounds, vinyl ether compounds, spiro orthoester compounds, ethylenically unsaturated compounds, cyclic ether compounds, cyclic thioether compounds, vinyl compounds, and the like. Any one of these cationically polymerizable monomers may be used alone, or any combination of two or more of them may be used at any ratio.

(Anionically polymerizable monomer)

Examples of the anionically polymerizable monomer include hydrocarbon monomers, polar monomers, and the like.

Examples of the hydrocarbon monomers include styrene, α-methylstyrene, butadiene, isoprene, vinylpyridine, vinylanthracene, derivatives thereof, and the like.

Examples of the polar monomers including methacrylic acid esters, acrylic acid esters, vinyl ketones, isopropenyl ketones, other polar monomers, and the like.

Any one of these anionically polymerizable monomers may be used alone, or any combination of two or more of them may be used at any ratio.

(Radically polymerizable monomer)

Examples of the radically polymerizable monomer include (meth)acryloyl group-containing compounds, (meth)acrylamides, vinyl esters, vinyl compounds, styrenes, spiro ring-containing compounds, and the like. Any of these radically polymerizable monomers may be used alone, or any combination of two or more of them may be used at any ratio.

In the present description, methacrylic and acrylic are collectively referred to as (meth)acrylic.

Among the above compounds, (meth)acryloyl group-containing compounds are preferred in terms of steric hindrance during radical polymerization.

(Molecular weight of polymerizable monomer)

The molecular weight of the polymerizable monomer used for the holographic recording medium composition of the present invention is generally 80 or more, preferably 150 or more, and more preferably 300 or more and is generally 3000 or less, preferably 2500 or less, and more preferably 2000 or less. When the molecular weight is equal to or more than the above lower limit, the rate of shrinkage due to polymerization by irradiation with light during holographic data recording can be reduced. When the molecular weight is equal to or less than the above upper limit, the mobility of the polymerizable monomer in a recording layer using the holographic recording medium composition is high, and the polymerizable monomer can easily diffuse, so that sufficient diffraction efficiency can be obtained.

(Refractive index of polymerizable monomer)

The refractive index of the polymerizable monomer at a wavelength of light (for example, a recording wavelength) applied to the holographic recording medium is generally 1.50 or more, preferably 1.52 or more, and still more preferably 1.55 or more and is generally 1.80 or less and preferably 1.78 or less. If the refractive index is excessively small, the diffraction efficiency is not sufficient, and multiplicity may not be sufficient. When the refractive index is excessively large, the difference in refractive index between the polymerizable monomer and the resin matrix is excessively large. In this case, scattering is significant, and this causes a reduction in transmittance, so that larger energy is required for recording and reproduction.

The refractive index is large when it is evaluated at a short wavelength. A sample whose refractive index is relatively high at short wavelengths exhibits a relatively high refractive index also at long wavelengths, and this relation is not reversed. It is therefore possible to predict the refractive index at the recording wavelength by evaluating the refractive index at a wavelength other than the recording wavelength.

When a sample of the polymerizable monomer is liquid, its refractive index can be measured by the minimum deviation method, the critical angle method, the V-block method, and the like. When the sample is solid, the refractive index of the polymerizable monomer can be determined by dissolving the compound in an appropriate solvent to prepare a solution, measuring the refractive index of the solution, and extrapolating the refractive index to a point where the content of the compound is 100% to thereby determine the refractive index.

The above-mentioned polymerizable monomer having a high refractive index is preferably a compound having a halogen atom (such as iodine, chlorine, or bromine) in its molecule or a compound having a heteroatom (such as nitrogen, sulfur, or oxygen). Of these, a compound having a heterocyclic structure is more preferable.

(Molar absorption coefficient of polymerizable monomer)

It is preferable that the molar absorption coefficient of the polymerizable monomer at the holographic recording wavelength is 100 $L \cdot mol^{-1} \cdot cm^{-1}$ or less. When the molar absorption coefficient is 100 $L \cdot mol^{-1} \cdot cm^{-1}$ or less, a reduction in the transmittance of the medium is prevented, and sufficient diffraction efficiency per thickness can be obtained.

<Component (d)>

The photopolymerization initiator generates cations, anions, or radicals under light to initiate a chemical reaction and contributes to polymerization of the above-described polymerizable monomer. There is no particular limitation on the type of photopolymerization initiator, and an appropriate photopolymerization initiator may be selected according to the type of polymerizable monomer.

The cationic photopolymerization initiator used may be any known cationic photopolymerization initiator. Examples of the cationic photopolymerization initiator include aromatic onium salts, and the like. Specific examples of the aromatic onium salts include compounds containing an anionic component such as $SbF_6^-$, $BF_4^-$, $AsF_6^-$, $PF_6^-$, $CF_3SO_3^-$, $B(C_6F_5)_4^-$, or the like, and an aromatic cationic component containing an atom such as iodine, sulfur, nitrogen, phosphorus, or the like. Of these, diaryliodonium salts, triarylsulfonium salts, and the like are preferred.

Any one of the above exemplified cationic photopolymerization initiators may be used alone, or any combination of two or more of them may be used at any ratio.

The anionic photopolymerization initiator used may be any known anionic photopolymerization initiator. Examples of the anionic photopolymerization initiator include amines, and the like. Examples of the amines include: amino group-containing compounds such as dimethylbenzylamine, dimethylaminomethylphenol, 1,8-diazabicyclo[5.4.0] undecene-7, and the like, and derivatives thereof; and imidazole compounds such as imidazole, 2-methylimidazole, 2-ethyl-4-methylimidazole, and the like, and derivatives thereof.

Any one of the above-exemplified anionic photopolymerization initiators may be used alone, or any combination of two or more of them may be used at any ratio.

The radical photopolymerization initiator used may be any known radical photopolymerization initiator. Examples of the radical photopolymerization initiator used include phosphine oxide compounds, azo compounds, azide compounds, organic peroxides, organic boronic acid salts, onium salts, bisimidazole derivatives, titanocene compounds, iodonium salts, organic thiol compounds, halogenated hydrocarbon derivatives, oxime ester compounds, and the like.

Any one of the above-exemplified radical photopolymerization initiators may be used alone, or any combination of two or more of them may be used at any ratio.

Other examples of photopolymerization initiators include imidazole derivatives, oxadiazole derivatives, naphthalene, perylene, pyrene, anthracene, coumarin, chrysene, p-bis(2-phenylethenyl)benzene and their derivatives, quinacridone derivatives, coumarin derivatives, aluminum complexes such as $Al(C_9H_6NO)_3$, rubrene, perimidone derivatives, benzopyran derivatives, rhodamine derivatives, benzothioxanthene derivatives, azabenzothioxanthene, phenylpyridine complexes, porphyrin complexes, polyphenylene vinylene materials, and the like.

The photopolymerization initiator is more preferably a compound having a molar absorption coefficient at the recording wavelength of 1000 $L \cdot mol^{-1} \cdot cm^{-1}$ or less. When the molar absorption coefficient is 1000 $L \cdot mol^{-1} \cdot cm^{-1}$ or less, a reduction in transmittance of the holographic recording medium at the recording wavelength that occurs when the photopolymerization initiator is mixed in an amount enough to obtain sufficient diffraction efficiency can be prevented.

<Component (e)>

The holographic recording medium composition of the present invention preferably contains the component (e) which is a nitroxyl radical group-containing compound, as an optional component.

The nitroxyl radical group-containing compound of the component (e) is preferably a compound containing an isocyanate-reactive functional group and a nitroxyl radical group. By containing such component (e) in the holographic recording medium composition of the present invention, the isocyanate-reactive functional group of the component (e) reacts with the isocyanate group of the component (a) to be fixed to the resin matrix, and the nitroxyl radical group contained in the component (e) improves the recording sensitivity, so that high $\Delta n$ can be achieved.

Examples of the isocyanate-reactive functional group contained in the component (e) are the same as those described for the isocyanate-reactive functional group contained in the component (b).

There is no particular limitation on the type of the component (e). Specific examples of the component (e) include, but not limited to, stable nitroxyl radical compounds such as 4-hydroxy-2,2,6,6-tetramethylpiperidine-1-oxyl (TEMPOL), 4-sulfanyl-2,2,6,6-tetramethylpiperidine-1-oxyl, 4-amino-2,2,6,6-tetramethylpiperidine-1-oxyl, 4-mercapto-2,2,6,6-tetramethylpiperidine-1-oxyl, 4-carboxy-2,2,6,6-tetramethylpiperidine-1-oxyl, 4-carbamoyl-2,2,6,6-tetramethylpiperidine-1-oxyl, 4-(2,3-epoxypropoxy)-2,2,6,6-tetramethylpiperidine-1-oxyl, 3-hydroxy-2,2,5,5-tetramethylpyrrolidine-1-oxyl, 3-sulfanyl-2,2,5,5-tetramethylpyrrolidine-1-oxyl, 3-amino-2,2,5,5-tetramethylpyrrolidine 1-oxyl, 3-mercapto-2,2,5,5-tetramethylpyrrolidine 1-oxyl, 3-carboxy-2,2,5,5-tetramethylpyrrolidine-1-oxyl, 3-carbamoyl-2,2,5,5-tetramethylpyrrolidine-1-oxyl, 3-(2,3-epoxypropoxy)-2,2,5,5-tetramethylpyrrolidine-1-oxyl, 3-hydroxy-2,2,5,5-tetramethylpyrroline-1-oxyl, 3-sulfanyl-2,2,5,5-tetramethylpyrroline-1-oxyl, 3-amino-2,2,5,5-tetramethylpyrroline-1-oxyl, 3-mercapto-2,2,5,5-tetramethylpyrroline-1-oxyl, 3-carboxy-2,2,5,5-tetramethylpyrroline-1-oxyl, 3-carbamoyl-2,2,5,5-tetramethylpyrroline-1-oxyl, 3-(2,3-epoxypropoxy)-2,2,5,5-tetramethylpyrroline-1-oxyl, and the like.

However, the component (e) is not limited to these in any way.

Any one of these compounds may be used alone, or any combination of two or more of them may be used at any ratio.

It is preferable that these nitroxyl radical groups are stable radical groups.

Among these, TEMPOL, 4-sulfanyl-2,2,6,6-tetramethylpiperidine-1-oxyl, 4-amino-2,2,6,6-tetramethylpiperidine-1-oxyl, and 4-mercapto-2,2,6,6-tetramethylpiperidine-1-oxyl are used preferably from the viewpoints of the stability of the compound and the reactivity with the isocyanate group. TEMPOL is particularly preferably used.

<Component (f)>

It is preferable that the holographic recording medium composition of the present invention further contains, as the component (f), a curing catalyst that facilitates the reaction between the isocyanate group-containing compound denoted as the component (a) and the isocyanate-reactive functional group-containing compound denoted as the component (b). Preferably, a bismuth-based catalyst serving as Lewis acid is used as the curing catalyst denoted as component (f).

Examples of the bismuth-based catalyst include tris(2-ethylhexanoate) bismuth, tribenzoyloxy bismuth, bismuth triacetate, bismuth tris(dimethyldithiocarbamate), bismuth hydroxide, triphenylbismuth(V) bis(trichloroacetate), tris(4-methylphenyl)oxobismuth(V), triphenylbis(3-chlorobenzoyloxy) bismuth(V), and the like.

Among these, trivalent bismuth compounds are preferred in terms of catalytic activity, and bismuth carboxylate and a compound represented by a general formula $Bi(OCOR)_3$ (R is a linear or branched alkyl group, a cycloalkyl group, or

a substituted or unsubstituted aromatic group) are more preferred.

Any one of these bismuth-based catalysts may be used alone, or any combination of two or more of them may be used at any ratio.

In addition, to control the reaction rate, an additional curing catalyst may be used in combination with the bismuth-based catalyst. There is no particular limitation on the catalyst that can be used in combination with the bismuth-based catalyst so long as it does not depart from the spirit of the invention. To obtain the synergistic effect of the catalysts, it is preferable to use a compound having an amino group in part of its structure. Examples of such a compound include amine compounds such as triethylamine (TEA), N,N-dimethylcyclohexylamine (DMEDA), N,N,N',N'-tetramethylethylenediamine (TMEDA), N,N,N',N'-tetramethylpropane-1,3-diamine (TMPDA), N,N,N',N'-tetramethylhexane-1,6-diamine (TMHMDA), N,N,N',N",N"-pentamethyldiethylenetriamine (PMDETA), N,N,N',N",N"-pentamethyldipropylene-triamine (PMDPTA), triethylenediamine (TEDA), N,N'-dimethylpiperazine (DMP), N,-methyl,N'-(2dimethylamino)-ethylpiperazine (TMNAEP), N-methylmorpholine (NMMO), N·(N',N'-dimethylaminoethyl)-morpholine (DMAEMO), bis(2-dimethylaminoethyl) ether (BDMEE), ethylene glycol bis(3-dimethyl)-aminopropyl ether (TMEGDA), diisopropylethylamine (DIEA), and the like.

Any one of these compounds may be used alone, or any combination of two or more of them may be used at any ratio.

<Additional components>

The holographic recording medium composition of the present invention may further contain additional components other than the components (a) to (f) described above so long as they do not depart from the spirit of the invention.

Examples of the additional components include: a solvent, a plasticizer, a dispersant, a leveling agent, an antifoaming agent, an adhesion promoter, etc. that are used to prepare the recording layer of the holographic recording medium; and a chain transfer agent, a polymerization terminator, a compatibilizer, a reaction aid, a sensitizer, an antioxidant, and the like that are used to control the recording reaction.

Any one of these components may be used alone, or any combination of two or more of them may be used at any ratio.

<Compositional ratios of components of holographic recording medium composition>

The contents of the components of the holographic recording medium composition of the present invention are freely set so long as they do not depart from the spirit of the invention. However, preferably, the contents of the components are within the following ranges.

The total content of the components (a) and (b) in the holographic recording medium composition of the present invention is generally 0.1% by weight or more, preferably 10% by weight or more, and more preferably 35% by weight or more and is generally 99.9% by weight or less, preferably 99% by weight or less, and more preferably 98% by weight or less. When the total content is equal to or more than the above lower limit, the recording layer can be easily formed. When the total content is equal to or less than the above upper limit, the contents of other essential components can be ensured.

In the holographic recording medium composition of the present invention, while satisfying the above-mentioned amount of allophanate bond units present, it is preferable that the ratio of the number of isocyanate-reactive functional groups of the component (b) to the number of isocyanate groups of the component (a) is 0.1 or more, more preferably 0.5 or more, and is usually 10.0 or less, and preferably 2.0 or less. When this ratio is within the above range, the number of unreacted functional groups is small, and storage stability is improved.

The content of the component (c) in the holographic recording medium composition of the present invention is usually 0.1% by weight or more, preferably 1% by weight or more, and more preferably 2% by weight or more and is usually 80% by weight or less, preferably 50% by weight or less, and more preferably 30% by weight or less. When the amount of the component (c) is equal to or more than the above lower limit, sufficient diffraction efficiency is obtained. When the amount of the component (c) is equal to or less than the above upper limit, the compatibility of the recording layer is maintained.

The ratio of the amount of the component (d) in the holographic recording medium composition of the present invention to the amount of the component (c) is usually 0.1% by weight or more, preferably 0.2% by weight or more, and more preferably 0.3% by weight or more and is usually 20% by weight or less, preferably 18% by weight or less, and more preferably 16% by weight or less. When the ratio of the component (d) is equal to or more than the above lower limit, sufficient recording sensitivity is obtained. When the ratio of the component (d) is equal to or less than the above upper limit, a reduction in sensitivity caused by a bimolecular termination reaction due to excessive generation of radicals can be prevented.

When the holographic recording medium composition of the present invention contains the component (e), the content of the component (e) is preferably such that the molar ratio of the component (e) to the component (d) (component

(e)/component (d)) is usually 0.1 or more, particularly 0.2 or more, and especially 0.3 or more, and usually 10 or less, particularly 8 or less, and especially 6 or less.

When the component (e)/component (d) ratio is equal to or more than the above lower limit, the effect of improving Δn due to the presence of the component (e) can be effectively obtained. When the component (e)/ component (d) ratio is equal to or less than the above upper limit, a radical polymerization reaction proceeds during exposure to light performed for the purpose of recording. In this case, the degree of refractive index modulation necessary to form a diffraction grating can be obtained, and sufficient recording sensitivity can be obtained.

Preferably, the content of the component (f) in the holographic recording medium composition of the present invention is determined in consideration of the rate of the reaction between the component (a) and the component (b). The content of the component (f) is usually 5% by weight or less, preferably 4% by weight or less, and more preferably 1% by weight or less and is preferably 0.001% by weight or more.

The total amount of other components in the holographic recording medium composition of the present invention, other than the components (a) to (f), is usually 30% by weight or less, preferably 15% by weight or less, and more preferably 5% by weight or less.

<Method for producing holographic recording medium composition and cured product for holographic recording medium>

In the method of producing the holographic recording medium composition of the present invention, the components (a) to (d), preferably the components (a) to (e), more preferably the components (a) to (f), may be freely combined and mixed in any order. In this case, additional components may be combined and mixed.

The cured product for a holographic recording medium of the present invention can be obtained by curing the obtained holographic recording medium composition of the present invention.

In this case, the composition may be heated at 30 to 100°C for about 1 to 72 hours in order to facilitate the curing reaction.

The holographic recording medium composition and the cured product for a holographic recording medium of the present invention can be produced also by a recording layer forming method in a method for producing the holographic recording medium of the present invention described later.

[Holographic recording medium]

The holographic recording medium of the present invention can be obtained by subjecting the cured product for a holographic recording medium of the present invention to interference exposure.

A preferred mode of the holographic recording medium of the present invention will be described hereinbelow.

The holographic recording medium of the present invention includes the recording layer and optionally includes the support and additional layers. Generally, the holographic recording medium includes the support, and the recording layer and the additional layers are stacked on the support to form the holographic recording medium. However, when the recording layer and the additional layers have the strength and durability required for the medium, the holographic recording medium may include no support. Examples of the additional layers include a protective layer, a reflective layer, and an anti-reflective layer (anti-reflective film).

Preferably, the recording layer of the holographic recording medium of the present invention is formed from the holographic recording medium composition of the present invention.

<Recording layer>

The recording layer of the holographic recording medium of the present invention is a layer formed from the holographic recording medium composition of the present invention, and information is recorded in the recording layer. The information is generally recorded as a hologram. As described later in detail in a recording method section, the polymerizable monomer contained in the recording layer partially undergoes a chemical change such as polymerization during holographic recording etc. Therefore, in the holographic recording medium after recording, part of the polymerizable monomer is consumed and present as a reacted compound such as a polymer.

There is no particular limitation on the thickness of the recording layer, and the thickness may be appropriately set in consideration of the recording method etc. The thickness is generally 1 μm or more and preferably 10 μm or more and is generally 3000 μm or less and preferably 2000 μm or less. When the thickness of the recording layer is equal to or more than the above lower limit, selectivity for holograms when multiple recording is performed on the holographic recording medium is high, and therefore the degree of multiple recording can be increased. When the thickness of the recording layer is equal to or less than the above upper limit, the recording layer as a whole can be formed uniformly. Therefore, the holograms can have uniform diffraction efficiency, and multiple recording can be performed with a high S/N ratio.

Preferably, the rate of shrinkage of the recording layer due to exposure to light during information recording or reproduction is 0.5% or less.

<Support>

There is no particular limitation on the details of the support so long as it has the strength and durability required for the medium, and any support can be used.
There is no particular limitation on the shape of the support, and the support is generally formed into a flat plate or a film.
There is no particular limitation on the material forming the support, and the material may be transparent or may be opaque.
Examples of the transparent material for the support include: organic materials such as acrylic, polyethylene terephthalate, polyethylene naphthoate, polycarbonate, polyethylene, polypropylene, amorphous polyolefin, polystyrene, cellulose acetate, and the like; and inorganic materials such as glass, silicon, quartz, and the like. Among these, polycarbonate, acrylic, polyester, amorphous polyolefin, glass, and the like are preferred, and polycarbonate, acrylic, amorphous polyolefin, and glass are more preferred.
On the other hand, examples of the opaque material for the support include: metals such as aluminum; and a coating prepared by coating the transparent support with a metal such as gold, silver, or aluminum or a dielectric such as magnesium fluoride or zirconium oxide.
There is no particular limitation on the thickness of the support. Preferably, the thickness is in the range of generally 0.05 mm or more and 1 mm or less. When the thickness of the support is equal to or more than the above lower limit, the mechanical strength of the holographic recording medium can be ensured, and warpage of the substrate can be prevented. When the thickness of the support is equal to or less than the above upper limit, the transmission amount of light can be ensured, and an increase in cost can be prevented.
The surface of the support may be subjected to surface treatment. The surface treatment is generally performed in order to improve the adhesion between the support and the recording layer. Examples of the surface treatment include corona discharge treatment performed on the support and the formation of an undercoat layer on the support in advance. Examples of the composition for the undercoat layer include halogenated phenols, partially hydrolyzed vinyl chloride-vinyl acetate copolymers, polyurethane resins, and the like.
Furthermore, the surface treatment on the support may be performed for a purpose other than the improvement in adhesion. Examples of such surface treatment include: reflecting coating treatment in which a reflecting coating layer is formed using a metal material such as gold, silver, aluminum or the like; and dielectric coating treatment in which a dielectric layer formed of magnesium fluoride, zirconium oxide, and the like is formed. Such a layer may be formed as a single layer, or two or more layers may be formed.
These surface treatment may be performed for the purpose of controlling the gas and water permeability of the substrate. For example, when the support supporting the recording layer has the function of preventing permeation of gas and water, the reliability of the medium can be further improved.
The support may be disposed only on one of the upper and lower sides of the recording layer of the holographic recording medium of the present invention or may be disposed on both sides. When supports are disposed on both the upper and lower sides of the recording layer, at least one of the supports is made transparent so that it can transmit active energy rays (such as excitation light, reference light, reproduction light, and the like).
When the holographic recording medium has the support on one side or both sides of the recording layer, a transmission hologram or a reflection hologram can be recorded. When a support having reflection characteristics is used on one side of the recording layer, a reflection hologram can be recorded.
Furthermore, a pattern for data addressing may be provided on the support. In this case, there is no particular limitation on the patterning method. For example, irregularities may be formed on the support itself, or the pattern may be formed on the reflective layer described later. The pattern may be formed using a combination of these methods.

<Protective layer>

The protective layer is a layer for preventing influences of a reduction in the sensitivity of the recording layer and deterioration in its storage stability due to oxygen or moisture. There is no particular limitation on the specific structure of the protective layer, and any known protective layer can be used. For example, a layer formed of a water-soluble polymer, an organic or inorganic material, etc. can be formed as the protective layer.
There is no particular limitation on the formation position of the protective layer. The protective layer may be formed, for example, on the surface of the recording layer or between the recording layer and the support or may be formed on the outer surface side of the support. The protective layer may be formed between the support and another layer.

<Reflective layer>

The reflective layer is formed when the holographic recording medium formed is of the reflection type. In the reflection holographic recording medium, the reflective layer may be formed between the support and the recording layer or may be formed on the outer side of the support. Usually, it is preferable that the reflective layer is present between the support and the recording layer.

As the reflective layer, any known reflective layer can be used. For example, a thin metal film can be used.

<Anti-reflective film>

When the medium of the present invention is constructed as either a transmission type or a reflection type holographic recording medium, an anti-reflective film may be disposed on the side on/from which object light and reading light are incident/emitted or between the recording layer and the support. The anti-reflective film improves the efficiency of utilization of light and prevents the occurrence of a ghost image.

Any known anti-reflective film may be used.

<Method for producing holographic recording medium>

There is no limitation on the method for producing the holographic recording medium of the present invention. For example, the holographic recording medium can be produced by coating the support with the holographic recording medium composition of the present invention without using a solvent to form the recording layer.

As the method for coating the holographic recording medium composition, any method can be used. Specific examples of the coating method include a spray method, a spin coating method, a wire bar method, a dipping method, an air knife coating method, a roll coating method, a blade coating method, a doctor roll coating method, and the like.

Furthermore, when forming a recording layer, particularly when a recording layer having a large thickness is to be formed, a method in which the holographic recording medium composition of the present invention is molded using a die, a method in which the holographic recording medium composition is applied to a release film and punched with a die may be used.

Alternatively, the holographic recording medium may be produced by mixing the holographic recording medium composition of the present invention with a solvent or an additive to prepare a coating solution, coating the support with the coating solution, and then drying the coating solution to form the recording layer. In this case also, any coating method can be used. For example, any of the above described methods can be used.

There is no particular limitation on the solvent used for the coating solution. It is usually preferable to use a solvent that can dissolve the component used sufficiently, provides good coating properties, and does not damage the support such as a resin substrate. Examples of the solvent include: ketone-based solvents such as acetone, methyl ethyl ketone, and the like; aromatic solvents such as toluene, xylene, and the like; alcohol-based solvents such as methanol, ethanol, and the like; ketone alcohol-based solvents such as diacetone alcohol, and the like; ether-based solvents such as tetrahydrofuran, and the like; halogen-based solvents such as dichloromethane, chloroform, and the like; cellosolve-based solvents such as methyl cellosolve, ethyl cellosolve, and the like; propylene glycol-based solvents such as propylene glycol monomethyl ether, propylene glycol monoethyl ether, and the like; ester-based solvents such as ethyl acetate, methyl 3-methoxypropionate, and the like; perfluoroalkyl alcohol-based solvents such as tetrafluoropropanol, and the like; highly polar solvents such as dimethylformamide, dimethyl sulfoxide, and the like; chain hydrocarbon-based solvents such as n-hexane, and the like; cyclic hydrocarbon-based solvents such as cyclohexane, cyclooctane, and the like; and mixtures of these solvents, and the like. One of these solvents may be used alone, or any combination of two or more of them may be used at any ratio. There is no limitation on the amount of the solvent used. However, in terms of coating efficiency and handleability, it is preferable to prepare a coating solution with a solid concentration of about 1 to 100% by weight.

Furthermore, when the resin matrix formed from the components (a) and (b) in the holographic recording medium composition of the present invention is thermoplastic, the recording layer can be formed by molding the holographic recording medium composition of the present invention using, for example, an injection molding method, a sheet molding method, or a hot press method.

Furthermore, when the amount of volatile components in the resin matrix formed from the components (a) and (b) is small and the resin matrix is photocurable or thermosetting, the recording layer can be formed by molding the holographic recording medium composition of the present invention using, for example, a reaction injection molding method or a liquid injection molding method. In this case, the molded product itself can be used as a holographic recording medium when the molded product has sufficient thickness, sufficient stiffness, sufficient strength, and the like.

Examples of the holographic recording medium production method include: a production method in which the recording layer is formed by coating the support with the holographic recording medium composition fused by heat and

cooling the holographic recording medium composition to solidify the composition; a production method in which the recording layer is formed by coating the support with the holographic recording medium composition in liquid form and subjecting the holographic recording medium composition to thermal polymerization to cure the composition; and a production method in which the recording layer is formed by coating the support with the holographic recording medium composition in liquid form and subjecting the holographic recording medium composition to photopolymerization to cure the composition.

The thus-produced holographic recording medium can be in the form a self-supporting slab or disk and can be used for three-dimensional image display devices, diffraction optical elements, large-capacity memories, and the like.

In particular, the holographic recording medium of the present invention that uses the holographic recording medium composition of the present invention has high $\Delta n$, reduces color unevenness, and improves brightness, and is therefore useful for light guide plates for AR glasses.

<Large-capacity memory applications>

Information is written (recorded)/read (reproduced) in/from the holographic recording medium of the present invention by irradiating the medium with light.

First, when recording information, light capable of causing a chemical change of the polymerizable monomer, i.e., its polymerization and a change in concentration, is used as the object light.

For example, when information is recorded as a volume hologram, the object light together with the reference light is applied to the recording layer to allow the object light to interfere with the reference light in the recording layer. In this case, the interfering light causes polymerization of the polymerizable monomer and a change in its concentration within the recording layer. Therefore, the interference fringes cause refractive index differences within the recording layer, and the information is recorded as a hologram through the interference fringes recorded in the recording layer.

On the other hand, when reproducing a volume hologram recorded in the recording layer, prescribed reproduction light (generally the reference light) is applied to the recording layer. The applied reproduction light is diffracted by the interference fringes. Since the diffracted light contains the same information as that in the recording layer, the information recorded in the recording layer can be reproduced by reading the diffracted light using appropriate detection means.

The wavelength ranges of the object light, the reproduction light, and the reference light can be freely set according to their applications and may be the visible range or the ultraviolet range. Preferred examples of such light include light from lasers with excellent monochromaticity and directivity such as: solid lasers such as ruby, glass, Nd-YAG, Nd-$YVO_4$ lasers; diode lasers such as GaAs, InGaAs, and GaN lasers; gas lasers such as helium-neon, argon, krypton, excimer, and $CO_2$ lasers; and dye lasers including dyes.

There is no particular limitation on the amounts of irradiation with the object light, the reproduction light, and the reference light, and these amounts can be freely set so long as recording and reproduction are possible. However, when the amounts of irradiation are extremely small, the chemical change of the polymerizable monomer is too incomplete, and the heat resistance and mechanical properties of the recording layer may not be fully obtained. Conversely, when the amounts of irradiation are extremely large, the components of the recording layer (the components of the holographic recording medium composition of the present invention) may deteriorate. Therefore, the object light, the reproduction light, and the reference light are applied at generally 0.1 $J/cm^2$ or more and 20 $J/cm^2$ or less according to the chemical composition of the holographic recording medium composition of the present invention used to form the recording layer, the type of photopolymerization initiator, the amount of the photopolymerization initiator mixed, etc.

Examples of the holographic recording method include a polarized collinear holographic recording method and a reference light incidence angle multiplexing holographic recording method. When the holographic recording medium of the present invention is used as a recording medium, good recording quality can be provided using any of the recording methods.

<AR glass light guide plate applications>

Volume holograms are recorded in the holographic recording medium of the present invention in the same manner as in the large-capacity memory applications.

A predetermined reproducing light is irradiated onto the recording layer to reproduce the volume hologram recorded in the recording layer. The applied reproduction light is diffracted by the interference fringes. In this case, even when the wavelength of the reproduction light does not coincide with the wavelength of the recording light, diffraction occurs when the Bragg condition for the interference fringes is satisfied. Therefore, by recording interference fringes corresponding to the wavelengths and incident angles of reproduction light beams to be diffracted, the reproduction light beams in a wide wavelength range can be diffracted, and the color display range of AR glasses can be increased.

By recording interference fringes corresponding to the wavelength and diffraction angle of reproduction light, the reproduction light entering from the outside of the holographic recording medium can be guided to the inside of the

holographic recording medium, and the reproduction light guided inside the holographic recording medium can be reflected, split, and expanded or reduced in size. Moreover, the reproduction light guided inside the holographic recording medium can be emitted to the outside of the holographic recording medium. This allows the viewing angle of AR glasses to be increased.

The wavelength ranges of the object light and the reproduction light can be freely set according to their applications, and the object light and the reproduction light may be in the visible range or in the ultraviolet range. Preferred examples of the object light and the reproduction light include light from the above-described lasers. The reproduction light is not limited to light from a laser etc., and display devices such as liquid crystal displays (LCDs), organic electroluminescent displays (OLEDs), and the like can also be used preferably.

There is no particular limitation on the amounts of irradiation with the object light, the reproduction light, and the reference light, and these amounts can be freely set so long as recording and reproduction are possible. However, when the amounts of irradiation are extremely small, the chemical change of the polymerizable monomer is too incomplete, and the heat resistance and mechanical properties of the recording layer may not be fully obtained. Conversely, when the amounts of irradiation are extremely large, the components of the recording layer (the components of the holographic recording medium composition of the present invention) may deteriorate. Therefore, the object light, the reproduction light, and the reference light are applied at generally 0.1 $J/cm^2$ or more and 20 $J/cm^2$ or less according to the chemical composition of the holographic recording medium composition of the present invention used to form the recording layer, the type of photopolymerization initiator, the amount of the photopolymerization initiator mixed, etc.

## Examples

The present invention will be described in more detail by way of Examples. The present invention is not limited to the Examples so long as the invention does not depart from the scope thereof.

### [Materials used]

Raw materials of compositions used in the Examples, Comparative Examples, and Reference Examples are as follows.

Component (a): isocyanate group-containing compound

- DURANATE™ TSS-100: hexamethylene diisocyanate-based polyisocyanate (NCO 17.8%) (manufactured by Asahi Kasei Corporation)
- DURANATE™ A201H: hexamethylene diisocyanate-based polyisocyanate (NCO 17.1%) (manufactured by Asahi Kasei Corporation)
- DURANATE™ TUL-100: hexamethylene diisocyanate-based polyisocyanate (NCO 23.2%) (manufactured by Asahi Kasei Corporation)
- Toronate XFLO100: hexamethylene diisocyanate-based polyisocyanate (NCO 12.1%) (manufactured by Vencorex)
- Takenate 600: 1,3-bis(isocyanatomethyl)cyclohexane (NCO 43.3%) (manufactured by Mitsui Chemicals, Inc.)

The components contained in these isocyanate group-containing compounds are represented by the following formulas. In the following formulas, the structural portion represented by the above-mentioned formula (I) contained in the circled portion is an allophanate bond unit.

[Chem. 2]

<DURANATE™ TSS-100>

Trifunctional components(29%)

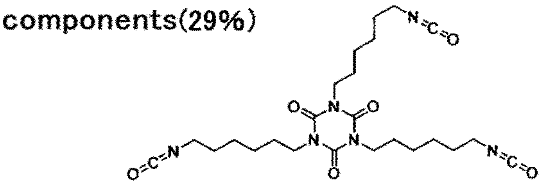

< DURANATETM ™A201H>

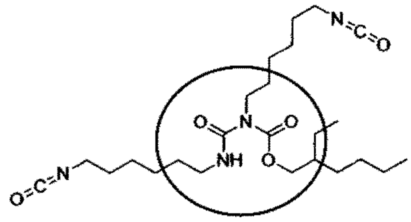

Bifunctional components(47%)

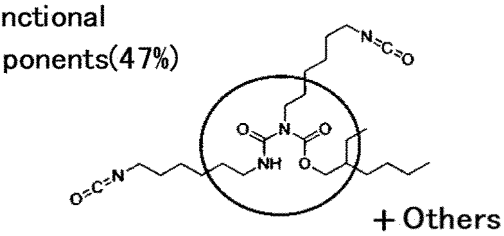

+ Others (24%)

<Takenate 600>

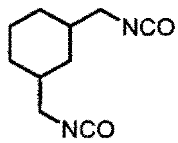

<DURANATE™ TUL-100>

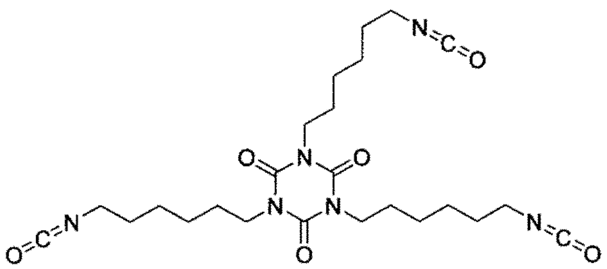

<Toronate XFLO100>

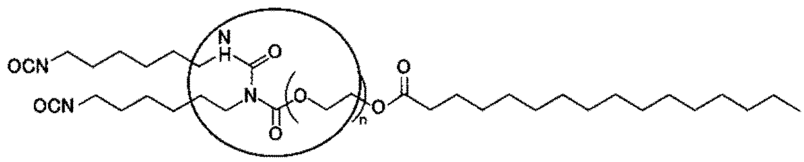

Component (b): isocyanate-reactive functional group-containing compound

- PCL-204HGT: polycaprolactonediol (molecular weight400) (manufactured by Daicel Corporation)
- PCL-205U: polycaprolactonediol (molecular weight 530) (manufactured by Daicel Corporation)
- PCL-305: polycaprolactonetriol (molecular weight 550) (manufactured by Daicel Corporation)

Component (c): polymerizable monomer

- HLM201: 2-[[2,2-bis(4-dibenzothiophenylthiomethyl)-3-(4-dibenzothiophenylthio)propoxy]carbonylamino]ethyl acrylate (molecular weight 872)

HLM303: 2-[[2,2-bis[(2-dibenzothiophen-4-ylphenyl)sulfanylmethyl]-3-(1,3-benzothiazo-2-ylsulfanylmethyl)propoxy] carbonylamino]ethyl acrylate (molecular weight 975)

Component (d): photopolymerization initiator

- HLI02: 1-(9-ethyl-6-cyclohexanoyl-9H-carbazol-3-yl)-1-(O-acetyloxime) methyl glutarate (molecular weight 505)

Component (e): nitroxyl radical group-containing compound having an isocyanate-reactive functional group

- 4-Hydroxy-2,2,6,6-tetramethylpiperidine-1-oxyl free radical (TEMPOL): manufactured by TOKYO CHEMICAL INDUSTRY Co., Ltd.

Component (f): curing catalyst

- Octylic acid solution of tris(2-ethylhexanoate)bismuth (amount of effective component 56% by weight)

[Example 1]

0.8541g of polymerizable monomer HLM303, 0.0274g of photopolymerization initiator HLI02, and 0.0103g of TEMPOL were dissolved in 0.8470g of Duranate™ TSS-100 and 1.9764g of Duranate™ A201H. 0.7618g of PCL-204HGT and 1.4148g of PCL-305 were mixed therein, and 0.0005g of an octylic acid solution of tris(2-ethylhexanoate) bismuth was dissolved and mixed by stirring.

The above mixture was poured onto a slide glass with 0.5 mm-thick spacer sheets placed on two opposite edges, and another slide glass was placed thereon. Clips were used to fix the edges, and heating was performed at 80°C for 24 hours to prepare an evaluation sample of a holographic recording medium composition. In this evaluation sample, a recording layer having a thickness of 0.5 mm was formed between the slide glasses used as covers.

[Example 2]

0.6306 g of polymerizable monomer HLM201, 0.0227 g of photopolymerization initiator HLI02, and 0.0085 g of TEMPOL were dissolved in 1.7661 g of Duranate™ TSS-100 and 1.1774 g of Toronate XFLO100. 0.2057 g of PCL-205U and 1.8509 g of PCL-305 were mixed therein and stirred.

Using the mixed solution, an evaluation sample was prepared in the same manner as in Example 1.

[Comparative Example 1]

0.8727 g of polymerizable monomer HLM303, 0.0274 g of photopolymerization initiator HLI02, and 0.0103 g of TEMPOL were dissolved in 2.5365 g of Duranate™ TSS-100. 1.6013 g of PCL-205U and 0.8622 g of PCL-305 were mixed therein, and 0.0002 g of an octylic acid solution of tris(2-ethylhexanoate)bismuth was dissolved and mixed by stirring.

Using the mixed solution, an evaluation sample was prepared in the same manner as in Example 1.

[Comparative Example 2]

0.7697g of polymerizable monomer HLM303, 0.0242g of photopolymerization initiator HLI02, and 0.0091g of TEMPOL were dissolved in 2.1080g of Duranate™ TSS-100 and 0.3720g of Takenate 600. 2.2680g of PCL-204HGT and

0.2520g of PCL-305 were mixed therein, and 0.0002g of an octylic acid solution of tris(2-ethylhexanoate)bismuth was dissolved and mixed by stirring.

Using the mixed solution, an evaluation sample was prepared in the same manner as in Example 1.

[Comparative Example 3]

0.6306g of polymerizable monomer HLM201, 0.0227g of photopolymerization initiator HLI02, and 0.0085g of TEMPOL were dissolved in 2.3419g of Duranate™ TUL-100. 2.1264g of PCL-204HGT and 0.5316g of PCL-205U were dissolved therein and mixed by stirring, and 0.0001g of an octylic acid solution of tris(2-ethylhexanoate)bismuth was dissolved and mixed by stirring.

Using the mixed solution, an evaluation sample was prepared in the same manner as in Example 1.

[Calculation of the amount of allophanate bond units]

The amount of allophanate bond units (mol/g) present in the isocyanate group-containing compound of the component (a) used in Examples and Comparative examples was calculated using the procedure described below.

Duranate™ A201H and Toronate XFLO100 are bifunctional isocyanate compounds having allophanate bond units, and the amount of allophanate bond units present (mol/g) was calculated from the NCO value using the following formula.

$$\text{NCO value}/(42 \times \text{number of isocyanate groups} \times 100)$$

Duranate™ TSS-100 is a mixture of bifunctional and trifunctional isocyanate compounds, so it cannot be determined by calculation from the NCO value. Therefore, the amount (mol/g) of allophanate bond units was calculated using the procedure described below.

10 mg/1 mL (acetonitrile) of benzylamine was added to 5 mg/1 mL (acetonitrile) of Duranate™ TSS-100: and reacted at room temperature for 30 minutes. DMF (3 mL) was added to this mixture to dissolve the precipitated components to prepare a sample for analysis by LC/MS. The LC/MS conditions are as shown in Table 1 below. From the spectrum obtained, the amount (mol/g) of allophanate bond units present was calculated from the ratio of the peak area of all components to the peak area of the structure containing allophanate bond units.

[Table 1]

**<Table 1 >**

| | |
|---|---|
| LC | Waters Acquity |
| Column | UPLC BEH $C_{18}$ 2.1 × 50mm 1.7 μm |
| Temperature | 40°C |
| Eluent conditions | A=0.1%HCOOH Water B=$CH_3CN$ 0min. 40%B→6min. 100%B (4min) |
| Flow rate | 0.2mL/min |
| UV detection wavelength | 254nm |
| MS | Waters LCT Premier XE |
| Ionization method | ESI method |

Duranate™ TUL-100 and Takenate 600 are isocyanate compounds that do not contain allophanate bond units.

Based on the amount (mol/g) of allophanate bond units present in each isocyanate compound obtained by the above calculation, the amount (mol/g) of allophanate bond units present relative to the total weight of the component (a) and the component (b) in the holographic recording medium composition prepared in each Example and Comparative Example was calculated. The results was shown in Table 2.

[Holographic recording and evaluation methods]

Holographic recording medium composition evaluation samples produced in Examples and Comparative

Examples were used to perform holographic recording and evaluate the holographic recording performance of each holographic recording medium using procedures described below.

Holographic recording was performed using a semiconductor laser with a wavelength of 405 nm. An exposure device shown in Fig. 1 was used to perform two-beam plane-wave holographic recording at an exposure power density per beam of 10 $mW/cm^2$.

Details will next be described.

(Holographic recording device)

Fig. 1 is a structural diagram showing the outline of the device used for transmission holographic recording. Fig. 2 is a structural diagram showing the outline of the device used for reflection holographic recording.

In Fig. 1 and Fig. 2, S represents a holographic recording medium sample. M1,M2 and M3 all represent mirrors. CS represents an exposure time control shutter. BS represents a beam shutter. PBS represents a polarizing beam splitter. LED represents a light source for post exposure (LED with a central wavelength of 405 nm manufactured by THORLAB). LD represents a recording laser light source emitting light with a wavelength of 405 nm (a single mode laser manufactured by TOPTICA Photonics and capable of emitting light with a wavelength of about 405 nm). PD1 and PD2 represent photodetectors.

<Transmission hologram recording exposure>

In transmission hologram recording exposure, the light having a wavelength of 405 nm generated from LD was split using PBS, and these were regarded as object light (M1 side) and reference light (M2 side). And the two beams were irradiated so as to intersect on the recording surface at an angle of 59.3°. At this time, the light beam was split such that a bisector (hereinafter referred to as the optical axis) of the angle between the two beams was perpendicular to the recording surface of the holographic recording medium, and the two beams obtained by splitting the light beam were applied such that the vibration planes of the electric field vectors of the two beams were perpendicular to a plane including the two intersecting beams.

The above case was set as a sample rotation angle of 0°, and 181 multiplex recording exposures were performed at the same location while changing the sample rotation angle by 0.2° from -18° to +18°. At this time, in all Examples and Comparative Examples, recording exposure was performed equally so that the total recording energy was 2 $J/cm^2$ so that the amounts of polymerizable monomer and photopolymerization initiator consumed for recording were equal.

<Reflection hologram recording exposure>

In reflection hologram recording exposure, the light having a wavelength of 405 nm generated from LD was split using PBS, and these were regarded as object light (M1 to M3 side) and reference light (M2 side). And the two beams were irradiated so as to intersect on the recording surface at an angle of 127°. The sample rotation angle of 0° was the same as that of the transmission hologram recording exposure device, and 161 multiplex recording exposures were performed at the same location while changing the angle of the hologram recording medium S from -24° to +29°. At this time, in all Examples and Comparative Examples, the recording exposure was performed equally so that the total recording energy was 2 $J/cm^2$ so that the amount of polymerizable monomer and photopolymerization initiator consumed in recording was equal.

<Post exposure>

After the multiplex recording exposure, the rotation angle was returned to 0°, and the signal growth time of 120 seconds was waited in a dark state, and the recording was fixed by irradiating the sample with 4 $J/cm^2$ by the post exposure light source LED.

<Reproduction of hologram recording >

The beam shutter BS on the object light side in Fig.1 and Fig. 2 was closed, and the reference light on the mirror M2 side was irradiated to reproduce the recorded hologram. The light intensity detected by PD1 was defined as diffracted light $I_{di}$, and the light intensity detected by PD2 was defined as transmitted light $I_{ti}$. The diffraction efficiency $\eta_i$ of each light diffracted from each of the multiplexed recorded interference patterns was calculated using the following formula (1). The cumulative transmission $\Delta n_T$ and cumulative reflection $\Delta n_R$ were calculated using the following formulas (2) and (3).

[Math. 1]

$$\eta_i = \frac{I_{di}}{I_{di} + I_{ti}} \quad \cdots (1)$$

$$\text{Camulative}\,\Delta n_T = \frac{\lambda \cdot \cos\theta}{\pi \cdot d} \sum_{i=1}^{m} \sqrt{\sin^{-1} \eta_i} \quad \cdots (2)$$

$$\text{Camulative}\,\Delta n_R = \frac{\lambda \cdot \cos\theta}{\pi \cdot d} \sum_{i=1}^{m} \sqrt{\tanh^{-1} \eta_i} \quad \cdots (3)$$

From these measured values, "($\Delta n_T$-$\Delta n_R$)/$\Delta n_R$×100" was calculated, and the magnitude relationship of the difference between the transmission and reflection Δn relative to the reflection $\Delta n_R$ was compared, and this was used as an index of recording performance stability independent of the grating pitch.

The results of evaluating the holographic recording media produced in Examples 1 and 2 and Comparative Examples 1 to 3 using the above method are shown in Table 2 below.

[Table 2]

<Table 2>

| | Composition | | | Evaluation results | | | |
|---|---|---|---|---|---|---|---|
| | Component (a) | Component (b) | Amount of allophanate bond units (mol/g) | $\Delta n_T$ | $\Delta n_R$ | $\Delta n_T$-$\Delta n_R$ | Recording performance stability (%) |
| Example 1 | TSS-100 + A201H | PCL-204HGT + PCL-305 | 1.0 × $10^{-3}$ | 0.041 | 0.038 | 0.003 | 8 |
| Example 2 | TSS-100 + XFLO100 | PCL-205U + PCL-305 | 7.5 × $10^{-4}$ | 0.038 | 0.036 | 0.002 | 6 |
| Comparative Example 1 | TSS-100 | PCL-205U + PCL-305 | 6.1 × $10^{-4}$ | 0.046 | 0.040 | 0.006 | 15 |
| Comparative Example 2 | TSS-100 + Takenate600 | PCL-204HGT + PCL-305 | 4.9 × $10^{-4}$ | 0.042 | 0.036 | 0.006 | 17 |
| Comparative Example 3 | TUL-100 | PCL-204HGT + PCL-205U | 0 | 0.037 | 0.031 | 0.006 | 19 |

The following can be seen from Table 2.

In Examples 1 and 2, the amount of allophanate bond units present is 6.5 × $10^{-4}$ mol/g or more, and a sufficient amount of allophanate bond units is contained in the media. At this time, the value of ($\Delta n_T$-$\Delta n_R$)/$\Delta n_R$×100 is 10% or less, and the difference in Δn between transmission and reflection is sufficiently small, i.e., recording performance stability was

excellent independing on the grating pitch.

In Comparative Examples 1 to 3, the amount of allophanate bond units present is less than $6.5 \times 10^{-4}$ mol/g, or no allophanate bond units are present, and a sufficient amount of allophanate bond units is not contained in the media. At this time, the value of $(\Delta n_T - \Delta n_R)/\Delta n_R \times 100$ was 15% or more, indicating that the difference in $\Delta n$ between transmission and reflection was large, i.e., the of recording performance stability was poor depending on the grating pitch.

Although the present invention has been described in detail by way of the specific modes, it is apparent for those skilled in the art that various changes can be made without departing from the spirit and scope of the present invention.

The present application is based on Japanese Patent Application No. 2022-106253 filed on June 30, 2022, the entire contents of which are incorporated herein by reference.

Reference Signs List

S Holographic recording medium

M1, M2, M3 Mirror

CS Exposure time control shutter

BS Beam shutter

LED LED light source for post exposure

LD Laser light source for recording light

PD1, PD2 Photodetector

PBS Polarizing beam splitter

## Claims

1. A holographic recording medium composition comprising components (a) to (d) below, wherein an amount of allophanate bond units contained in the component (a) relative to a total weight of the components (a) and (b) is $6.5 \times 10^{-4}$ mol/g or more:

    component (a): an isocyanate group-containing compound;
    component (b): an isocyanate-reactive functional group-containing compound;
    component (c): a polymerizable monomer; and
    component (d): a photopolymerization initiator.

2. The holographic recording medium composition according to claim 1, wherein the polymerizable monomer of the component (c) is a (meth)acrylic-based monomer.

3. The holographic recording medium composition according to claim 1, wherein the molecular weight of the polymerizable monomer of the component (c) is 300 or more.

4. The holographic recording medium composition according to claim 1, wherein the content of the component (c) in the composition is 0.1% by weight or more and 80% by weight or less, and the content of the component (d) in the composition is 0.1% by weight or more and 20% by weight or less with respect to the component (c).

5. The holographic recording medium composition according to claim 1, further comprising a component (e) below: component (e): a nitroxyl radical group-containing compound.

6. The holographic recording medium composition according to claim 5, wherein the component (e) is a compound having an isocyanate-reactive functional group and a nitroxyl radical group.

7. The holographic recording medium composition according to claim 6, wherein the component (e) is 4-hydroxy-2,2,6,6-tetramethylpiperidine-1-oxyl.

8. The holographic recording medium composition according to claim 5, wherein a molar ratio of the component (e) to the component (d) in the composition (component (e)/component (d)) is 0.1 or more and 10 or less.

9. The holographic recording medium composition according to claim 1, wherein the total content of the component (a) and component (b) in the composition is 0.1% by weight or more and 99.9% by weight or less, and wherein the ratio of the number of isocyanate-reactive functional groups contained in the component (b) to the number of isocyanate groups contained in the component (a) is 0.1 or more and 10.0 or less.

10. The holographic recording medium composition according to claim 1, further comprising a component (f) below: component (f): a curing catalyst.

11. A cured product for a holographic recording medium, wherein the cured product is obtained by curing the holographic recording medium composition according to claim 1.

12. A stacked body for a holographic recording medium, the stacked body comprising: a recording layer formed from the cured product for a holographic recording medium according to claim 11; and a support.

13. A holographic recording medium obtained by exposing the cured product for a holographic recording medium according to claim 11 or the stacked body for a holographic recording medium according to claim 12 to light.

14. The holographic recording medium according to claim 13, wherein the holographic recording medium is a light guide plate for AR glasses.

[Fig. 1]

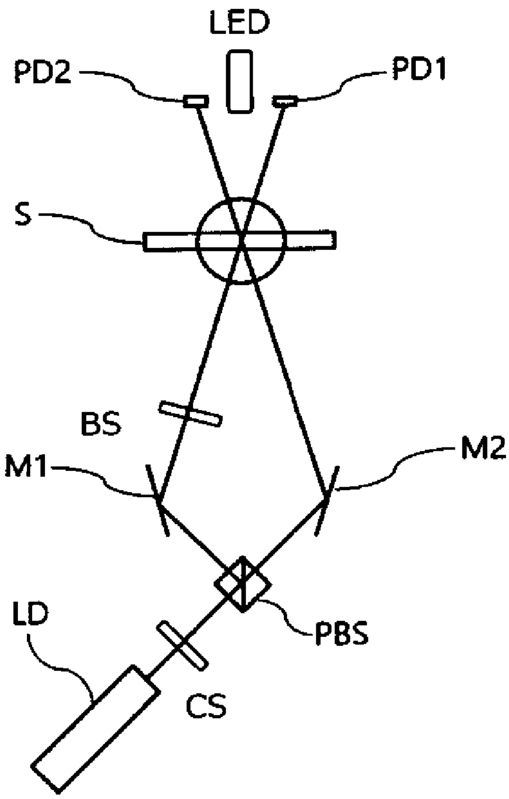

[Fig. 2]

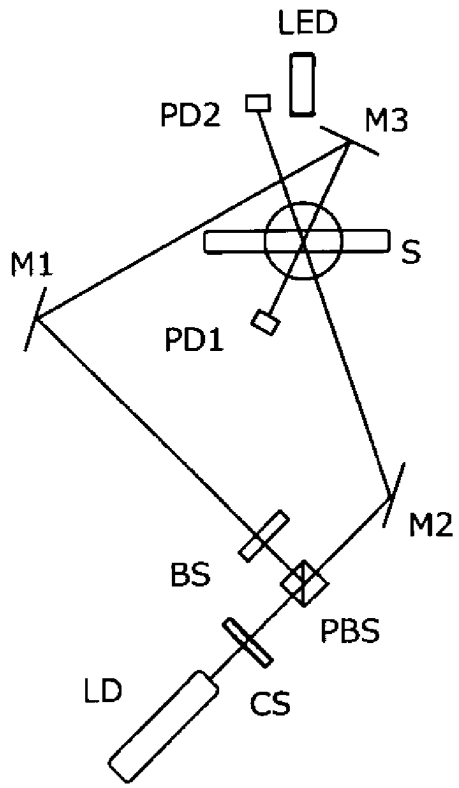

**INTERNATIONAL SEARCH REPORT**

International application No.
**PCT/JP2023/024171**

**A. CLASSIFICATION OF SUBJECT MATTER**

***G11B 7/24044***(2013.01)i; ***C08G 18/28***(2006.01)i; ***G02B 5/32***(2006.01)i; ***G03H 1/02***(2006.01)i; ***G11B 7/0065***(2006.01)i
FI: G11B7/24044; C08G18/28 050; G02B5/32; G03H1/02; G11B7/0065

According to International Patent Classification (IPC) or to both national classification and IPC

**B. FIELDS SEARCHED**

Minimum documentation searched (classification system followed by classification symbols)

G11B7/24044; C08G18/28; G02B5/32; G03H1/02; G11B7/0065

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/032167 A1 (MITSUBISHI CHEMICAL CORP.) 13 February 2020 (2020-02-13) claims 5, 6, paragraph [0059] | 1-14 |
| A | JP 2012-504665 A (BAYER MATERIALSCIENCE AG) 23 February 2012 (2012-02-23) claims 1, 2 | 1-14 |
| A | JP 2016-145352 A (COVESTRO DEUTSCHLAND AG) 12 August 2016 (2016-08-12) claims 6, 12 | 1-14 |
| A | JP 2016-517450 A (VENCOREX FRANCE) 16 June 2016 (2016-06-16) claim 1 | 1-14 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 August 2023** | **05 September 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/024171**

| Patent document cited in search report | Publication date (day/month/year) | Patent family member(s) | Publication date (day/month/year) |
|---|---|---|---|
| WO 2020/032167 A1 | 13 February 2020 | US 2021/0116805 A1<br>claims 5, 6, paragraph [0120]<br>EP 3836143 A1<br>CN 112313745 A | |
| JP 2012-504665 A | 23 February 2012 | US 2011/0189591 A1<br>claims 13, 14<br>WO 2010/037496 A1 | |
| JP 2016-145352 A | 12 August 2016 | US 2012/0231376 A1<br>claims 23, 33<br>WO 2011/054795 A1<br>CN 102667934 A | |
| JP 2016-517450 A | 16 June 2016 | US 2016/0024002 A1<br>claim 1<br>WO 2014/140238 A1<br>CN 105143179 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021012249 A
- JP 2007034334 A
- JP H8160842 A
- JP 2003156992 A
- JP 2022106253 A